# EUROPEAN PATENT SPECIFICATION

(11) **EP 2 431 209 B1**
(45) Date of publication and mention of the grant of the patent: **29.05.2013**
(21) Application number: 11169494.9
(22) Date of filing: 10.06.2011
(51) Int. Cl.: B60K 15/04, B60K 15/05

(54) **Protective device for the fuel tank of vehicles**
Schutzvorrichtung für den Kraftstofftank von Fahrzeugen
Dispositif de protection pour le réservoir de carburant de véhicules

(30) Priority: 21.09.2010 IT TV20100128
(43) Date of publication of application: 21.03.2012
(73) Proprietor: Lago Accessori S.r.l., 35014 Fontaniva (PD) (IT)
(72) Inventor: Lago, Fabio, 35013 CITTADELLA PD (IT)
(74) Representative: Modiano, Micaela Nadia

(56) References cited:
- WO-A2-2009/071983
- DE-A1- 4 132 056

## Description

The present invention relates to a protective device for the fuel tank of vehicles.

Currently, the market offers a rather limited number of alternatives which range from the traditional cap, which is screwed or mated by means of a bayonet mount onto the mouth of the tank; alternatively, the cap is hinged to the mouth of the tank.

In any case the known art involves the manipulation of the cap by the user for gaining access to the tank and filling it with fuel, and the possibility exists that the user will forget to perform the final tightening operation with the closing twist of the cap.

Then on the cap there is a closure which can be of the key type, and thus it necessitates the intervention of the operator both in the opening step and in the closing step; or the closing can be activated manually, or forced by the presence of a spring if the cap is hinged to the tank; this spring causes the automatic closing, but not the tightening, of the cap once the refueling nozzle is extracted.

The disadvantages of the above-mentioned known art consist in that with traditional caps there is the possibility that the cap is accidentally left behind at the refueling location.

If a cap is used which can be locked on a locking ring and the two components are rendered integral by a chain, there is still the possibility that the tank is not re-closed after refueling.

Furthermore, it is necessary to perform a manual operation on components that are covered with sludge from hydrocarbons, which is often slippery, and which makes the screwing and, especially, the unscrewing difficult to achieve.

If solutions are used which involve the use of a cap with a locking ring, in which the two components are mutually hinged, it has been found that in the absence of a spring (which forces the cap into the closed position), if the cap is not locked, then it is possible for fuel to spill out.

And even if there is a spring, this makes the refueling operations difficult because the operator has to use one hand to hold the cap open and the other hand to insert or extract the refueling nozzle.

One solution that has been adopted by makers of fuel tanks consists in a pan which is hinged to the inside of the locking ring of the tank, and is held closed by a spring and opened each time the refueling nozzle is inserted.

This solution does not resolve all of the above-mentioned problems, since it makes the contents of the tank directly accessible, thus permitting the theft of fuel, since it does not allow, moreover, any installation of fuel anti-theft systems of a known type.

It should also be noted that the known art described does not meet recent regulations, such as Directive 2000/8/CE of March 20th, 2000, which modifies Directive 70/221/CEE, which specify a limit to the quantity of fuel spilled in the event of the vehicle's being overturned and/or the cap's absence from the tank; indeed, the fuel tank caps currently available are inadequate for the purpose of closing the tank as intended by the regulations.

In this specific case the regulations state the following: the fuel must not escape through the tank cap or through the devices provided to compensate for excess pressure during the foreseeable course of operation of the vehicle. In the case of overturning of the vehicle, a drip may be tolerated provided that it does not exceed 30 g/min.

DE 41 32 056 A1 discloses a protective device according to the preamble of claim 1 having a vehicle fuel tank locking cap comprising a filler connector provided with a slider which closes the filler tube and slides along a pair of guide rails when the fuel pump nozzle is inserted. The guide rails are secured to a niche wall in the side of the vehicle and the return action of the slider is controlled by a compression spring.

WO 2009/071983 A2 discloses a capless refueling system cover including a sping-biased sliding fill neck cover provided with a locking mechanism that selectively blocks lateral movement of the cover to prevent access to the filler neck opening and may be selectively unlocked to allow lateral movement of the cover such that the fill nozzle may be inserted into the fill opening.

The aim of the present invention is therefore to solve the above-mentioned technical problems, by eliminating the drawbacks in the cited known art, by providing a device that makes it possible to achieve optimal protection for the fuel tank of vehicles and which makes it possible at the same time both to achieve the optimal opening and closing of the tank itself and to adhere to the specifications imposed by the recently-introduced regulations.

Within this aim, an object of the present invention is to provide a protective device for the fuel tank of vehicles which makes it possible to perform the refueling rapidly and easily.

Another object is to provide a device that, in addition to protecting the tank and enabling its closing and its opening, does not have to be manipulated by the user.

Another object is to provide a device that makes it possible to rapidly and easily achieve, at the end of the refueling operation, the optimal seal against the leakage of fuel.

Another object is to provide a device that can be coupled to an anti-theft device of a known type.

Another object is to provide a device that is structurally simple and low-cost.

In accordance with the invention, there is provided a protective device for the fuel tank of vehicles as defined in the appended claims.

Conveniently; on said lid there are means for temporarily locking the sliding of said slider with respect to said base and/or means adapted to allow the venting of said tank.

Further characteristics and advantages of the invention will become better apparent from the detailed description of a particular, but not exclusive, embodiment, illustrated by way of non-limiting example in the accompanying drawings wherein:
Figure 1 is a perspective view of a device according to the invention from the front;
Figures 2 and 3 are a perspective view and a side view, respectively, of the device according to the invention in the open condition for allowing the introduction of fuel into the tank;

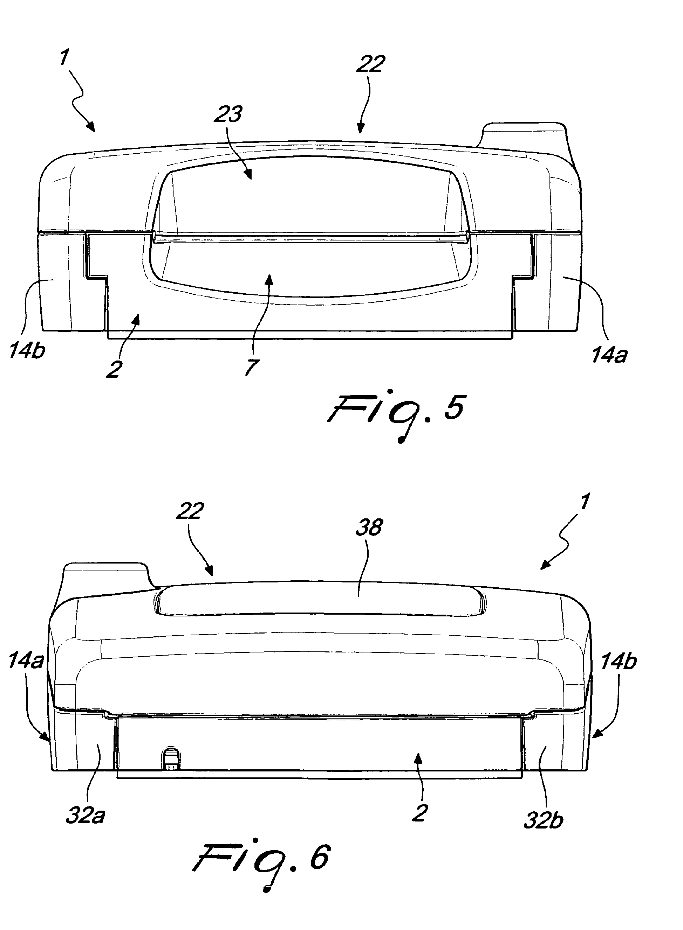

Figures 4, 5 and 6 are an end elevation view, a front elevation view and a rear elevation view of the device according to the invention;
Figure 7 is a plan view of the device according to the invention;

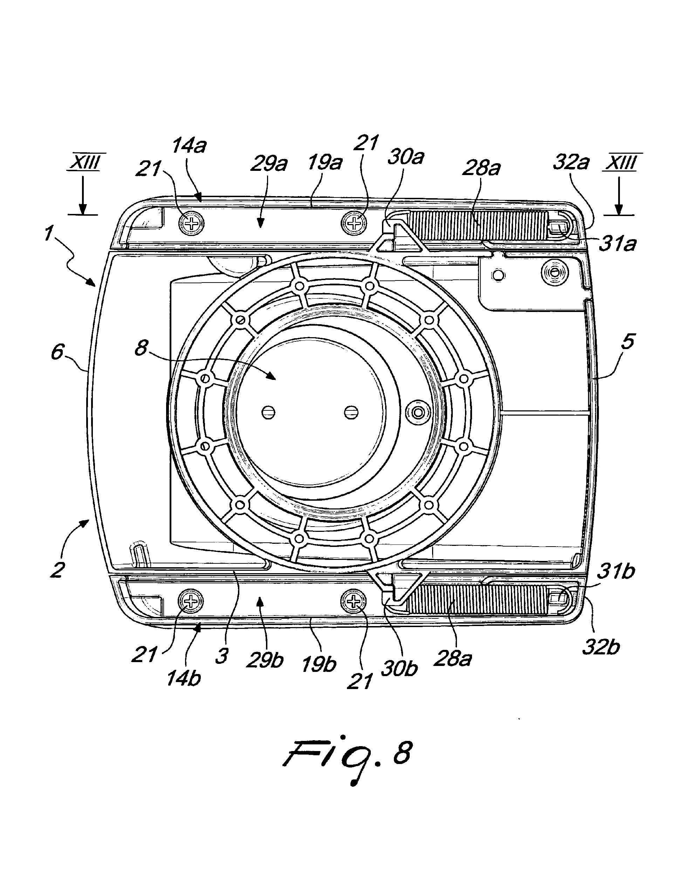

Figure 8 is a view from below of the device according to the invention;
Figure 9 is a partially cross-sectional isometric view of the device according to the invention;

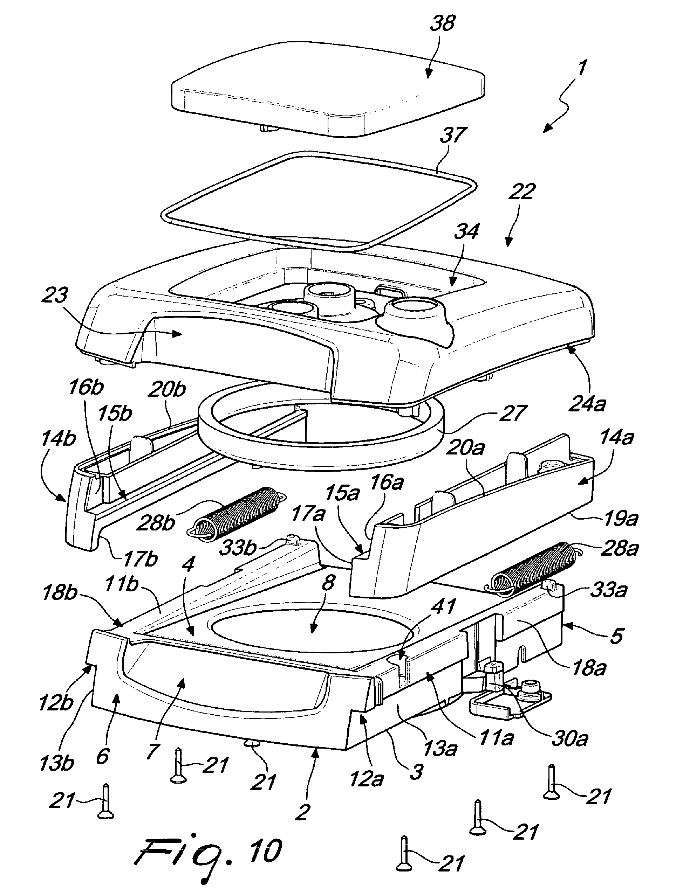

Figure 10 is an exploded end view of the device according to the invention;

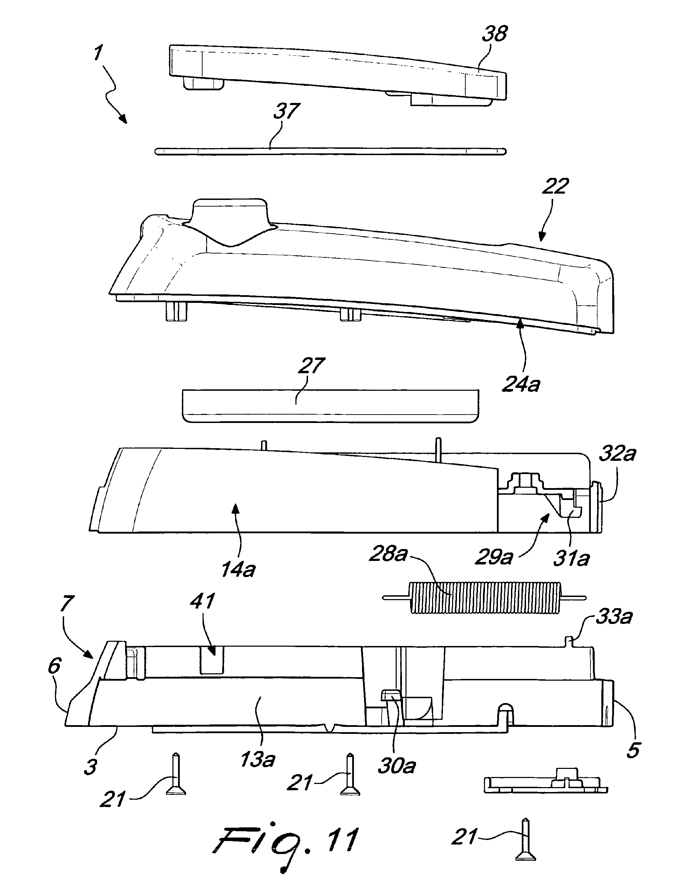

Figure 11 is an exploded end view of the device according to the invention;

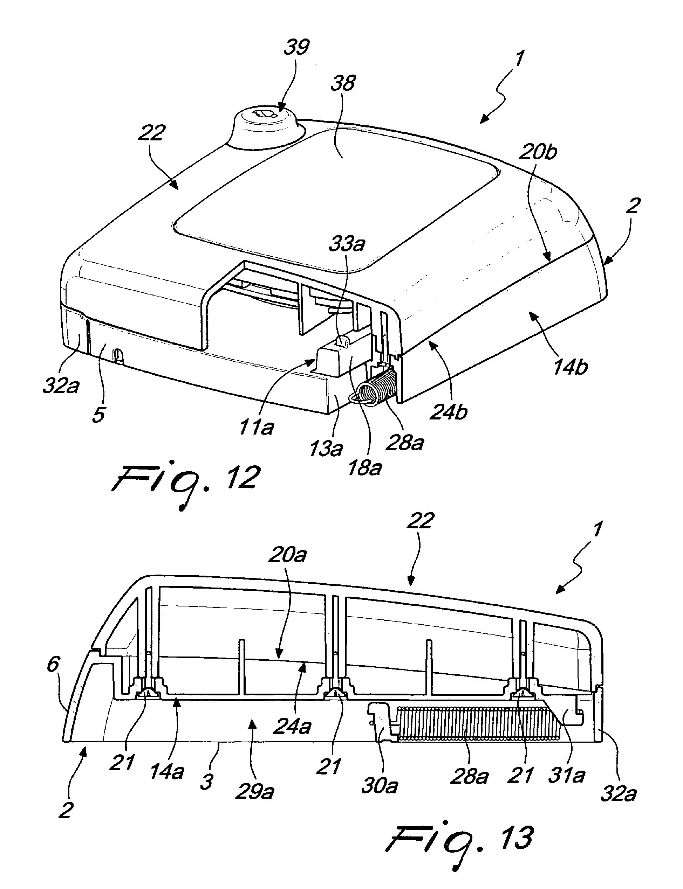

Figure 12 is a partially sectional isometric rear view of the device according to the invention;
Figure 13 is a sectional view taken along the line XIII-XIII in Figure 8.

In the embodiments that follow, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures cited above, the reference numeral 1 designates a protective device for the fuel tank of vehicles.

The device is constituted by a base 2, which is fixed to a locking ring for refueling the tank by means of a rapid attachment system and/or anti-theft system of a known type.

The base 2 is constituted by a body shaped essentially like a parallelepiped, which has a flat lower surface 3, which rests almost at the tank, and an upper surface 4, which is arranged along an inclined plane so as to form an acute angle with respect to the lower surface or edge 3 in the direction of the rear wall 5, assuming a clockwise rotation as positive.

The base 2 has a front wall 6 at which, approximately centrally, a first bevel 7 is defined that is adapted to constitute a drainer.

Approximately at the center of the upper surface 4 of the base 2 there is a first hole 8 which is connected to the underlying opening of the tank.

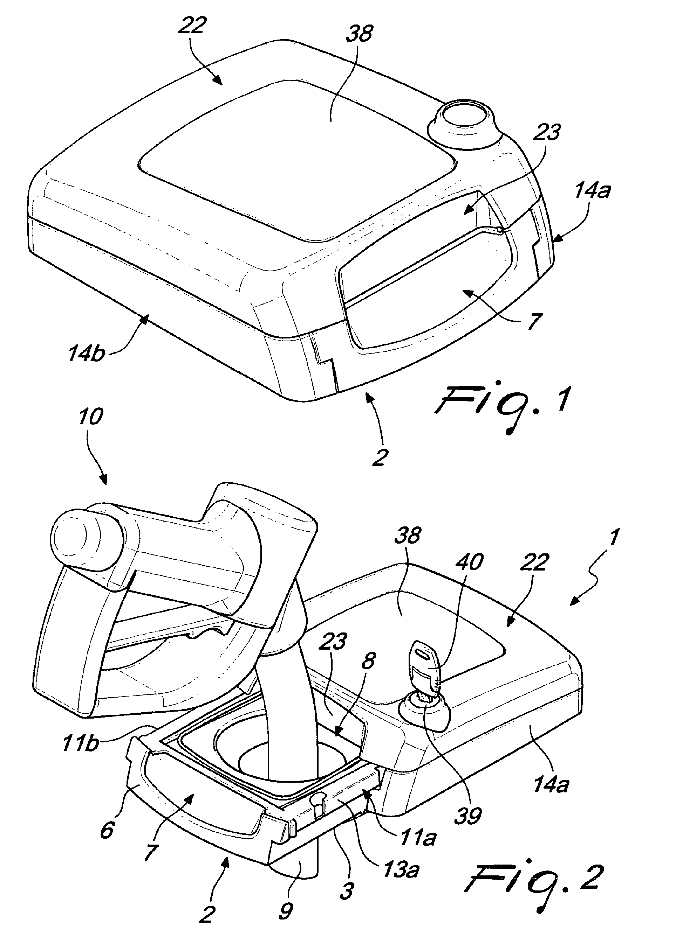

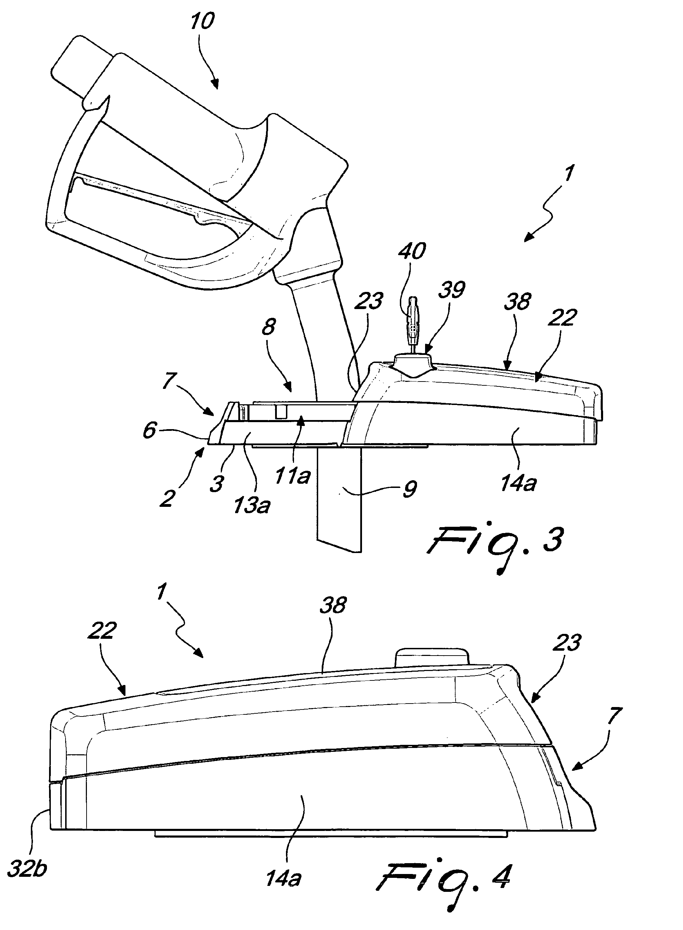

At this first hole the tube 9 of a refueling nozzle 10 can be positioned, as shown in Figures 2 and 3.

At the sides of the base 2 there is a pair of guides 11a, 11b, which are arranged approximately parallel to each other and along a same longitudinal axis which is approximately parallel to the axis of the lower edge or surface 3, the guides 11a, 11b having a parallelepiped shape, which preferably has a square plan, and a first undercut 12a, 12b that protrudes slightly beyond the side walls 13a, 13b of the base 2.

Two sliders 14a, 14b are associated at the guides 11a, 11b and have a box-like shape and an approximately L-shaped transverse cross-section, and a second undercut 15a, 15b, which mates by sliding with the first undercut 12a, 12b.

The L-shaped configuration of the pair of sliders 14a, 14b forms, adjacent to the second undercut 15a, 15b, an upper lateral surface 16a, 16b and an underlying lower lateral surface 17a, 17b, which face each other and can slide with respect to the outer surface 18a, 18b of the guides 11a, 11b and of the side walls 13a, 13b of the base 2.

The pair of sliders 14a, 14b moreover have a lower edge 19a, 19b that lies substantially at the lower edge or surface 3 of the base 2 and an outer upper edge 20a, 20b which is inclined with an orientation approximately equal to the orientation of the inclined, upper surface 4 of the base 2.

A lid 22 is associated, by means of adapted screws 21, above the pair of sliders 14a, 14b.

The size of the pair of sliders 14a, 14b and of the lid 22 is such as to surmount completely, in the closed condition, the underlying base 2.

The lid 22 is provided at the front with a second bevel 23, which in the closed condition is arranged above the first bevel 7. The second bevel 23 forms a resting point for the end of the tube 9 of the refueling nozzle 10.

The lid 22 is provided, in a lower region, with longitudinal perimetric edges 24a, 24b, which are likewise inclined with respect to the outer upper edge 20a, 20b of the pair of sliders 14a, 14b.

The shape of the lid 22 is box-like so as to form internally a lower flat surface 25 from which there protrudes, in the direction of the underlying base 2, an annular seat 26 for a sealing means, such as a first gasket 27 which is adapted to interact, hermetically, in the condition in which the lid is closed onto the base 2, with a region adjacent to the perimetric edge of the underlying first hole 8 provided on the surface 4 of the base 2.

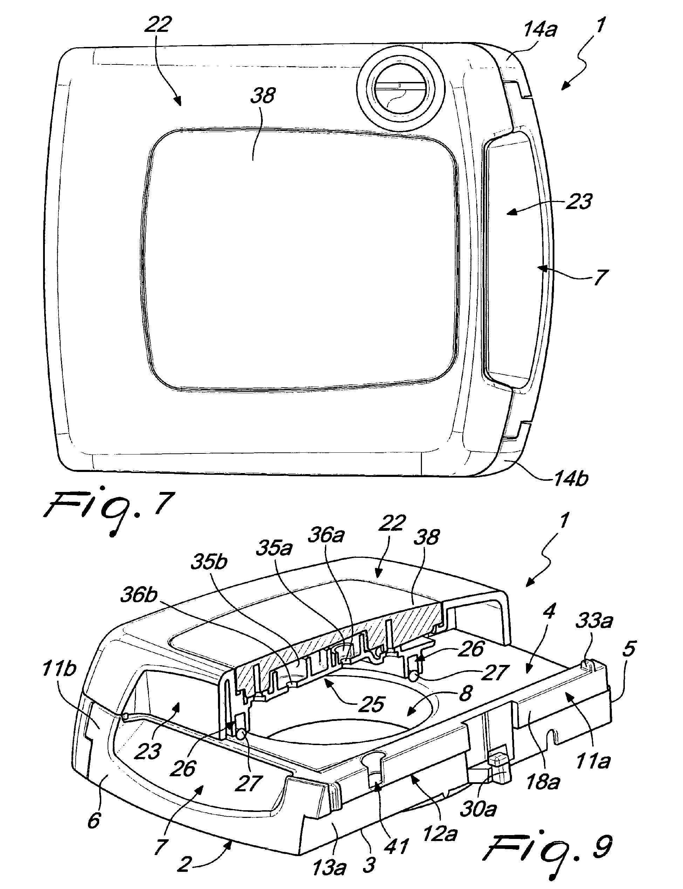

The inclined arrangement of the surface 4 of the base 2 and of the outer upper edges 20a, 20b of the pair of sliders 14a, 14b and the positioning and sizing of the annular seat 26 and of the first gasket 27 are such that, in the condition in which the lid 22 is closed onto the base 2, as shown in Figures 1 and 9, they entail the hermetic arrangement of the first gasket 27 at the underlying first hole 8 provided in the base 2, which is connected to the tank.

In the condition in which the lid 22 is open with respect to the base 2, as shown in Figures 2 and 3, the first gasket 27 is arranged above and spaced with respect to the upper surface 4 of the base 2, thus not obstructing the sliding phase of the lid 22 with respect to the base 2.

The sliding of the pair of sliders 14a, 14b and therefore of the lid 22 associated with them occurs in contrast with at least one elastically deformable element, such as a pair of cylindrical helical extension springs 28a, 28b.

These springs 28a, 28b are arranged at an adapted compartment 29a, 29b which is provided below the pair of sliders 14a, 14b.

The springs 28a, 28b are interconnected, at their ends, at a first pin 30a, 30b, which protrudes laterally to the side walls 13a, 13b of the base 2 in a region that preferably lies below the guides 11a, 11b, the first pins being concealed inside the compartment 29a, 29b.

The first pin 30a, 30b protrudes in a region which is intermediate between the rear wall 5 and the front wall 6 of the base 2, and preferably more adjacent to the rear wall 5.

The other end of the pair of springs 28a, 28b is interconnected to a second pin 31a, 31b, which is jointly connected to the pair of sliders 14a, 14b and protrudes at the compartment 29a, 29b in a position that is adjacent to the rear surface 32a, 32b of each pair of sliders 14a, 14b.

The size of the springs 28a, 28b is such that they tend to keep the lid 22 and the base 2 in the mutually closed condition.

The sliding of the lid 22 in the direction opposite to the front wall 6 of the base 2 is allowed by such an extent as to make the first hole 8 accessible to the tube 9 of the refueling nozzle 10.

There are stroke limiting means constituted for example by a pair of lugs 33a, 33b which protrude above the guides 11a, 11b in proximity to the rear wall 5 of the base 2.

These lugs 33a, 33b interact by abutment with adapted means which are provided on the lid 22 and are positioned appropriately.

At the lid 22 there is a recess 34, at which means are provided which are adapted to allow the venting of the tank, these means being constituted for example by adapted safety valves arranged at a pair of cylindrical seats 35a, 35b which have adapted second holes 36a, 36b that pass through the lower surface 25 of the lid 22 in a region which is connected to the underlying first hole 8.

A second gasket 37 can be positioned perimetrically at the recess 34, the recess 34 being blocked with an adapted removable plug 38.

Means are also provided for temporarily locking the sliding of the slider and thus of the lid 22 with respect to the base 2, these means being constituted by an adapted lock 39, which can be activated by means of an adapted key 40.

The lock 39 can be arranged advantageously at a lateral region of the lid 22 while the key has an adapted and known bolt, which interacts selectively at an adapted receptacle 41 provided at one of the pairs of sliders 14a, 14b.

The device 1 thus enables an operator to carry out all of the operation of opening the cap 22 simply by using the refueling nozzle 10, with which the lid 22 is pushed so as to slide, until it reveals the first hole 8 of the mouth of the tank, into which the refueling nozzle will naturally enter as a result of gravity.

Once refueling is completed, all that is needed is to extract the refueling nozzle and the lid 10 will close automatically by the action of the pair of springs 28a, 28b.

The closing seal occurs by the action of the first gasket 27 which is pressed around the perimeter of the first hole 8 in the closed position, but which is disengaged as soon as the sliding for opening the lid 22 occurs, due to the inclined planes of the upper surface 4 of the base 2, of the longitudinal perimetric edges 24a, 24b of the pair of sliders 14a, 14b, and of the shape of the annular seat 26 and of the first gasket 27.

In practice it has been found that the invention fully achieves the set aim and objects, a device being provided that makes it possible to achieve the optimal opening and closing of the fuel tank of vehicles, while at the same time making it possible to adhere to the specifications imposed by the recently-introduced regulations.

Moreover, the device makes it possible to perform the refueling rapidly and easily without needing to be handled by the user.

The device also makes it possible to rapidly and easily achieve, at the end of the refueling, the optimal seal against the leakage of fuel and it can be coupled to an anti-theft device of a known type.

Obviously the invention, thus conceived, is susceptible of numerous modifications and variations, all of which are within the scope of the appended claims.

Obviously the materials used as well as the dimensions constituting the individual components of the invention can be more pertinent to specific requirements.

The various means for effecting certain different functions shall not in any way coexist only in the illustrated embodiment, but may be present per se in many embodiments, even if they are not illustrated.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A protective device (1) for the fuel tank of vehicles, comprising a perforated base (2) having a flat lower surface (3) and an upper surface (4) **characterized in that** said upper surface (4) is arranged along an inclined plane so as to form an acute angle with respect to said lower surface (3), which can be associated with said tank and with which at least one slider (14a, 14b) is associated so that it can slide in contrast with at least one elastically deformable element, at least one lid (22) being associated with said at least one slider (14a, 14b) and being arranged along an inclined plane and provided with means (27) for forming a seal with said base (2).

2. The device according to claim 1, **characterized in that** on said lid there are means for temporarily locking the sliding of said slider with respect to said base and/or means adapted to allow the venting of said tank.

3. The device according to claims 1 and 2, **characterized in that** said base (2) is constituted by a body shaped essentially like a parallelepiped, which has a flat lower surface (3), which rests almost at said tank, and an upper surface (4), arranged along an inclined plane so as to form an acute angle with respect to the lower edge or surface (3) in the direction of the rear wall (5), assuming a clockwise rotation as positive, said base (2) having a front wall (6) at which there is, approximately centrally, a first bevel (7) adapted to constitute a drainer, where at the sides of said base (2) there is a pair of guides (11a, 11b), which are arranged approximately parallel to each other and along a same longitudinal axis approximately parallel to the axis of said lower edge or surface (3), said guides (11a, 11b) having a parallelepiped shape and a first undercut (12a, 12b) that protrudes slightly beyond said side walls (13a, 13b) of said base (2).

4. The device according to claims 1 and 3, **characterized in that** approximately centrally to said upper surface (4) of said base (2) there is a first hole (8), which is connected to an underlying opening provided in said tank, the tube (9) in a refueling nozzle (10) being arrangeable at said first hole.

5. The device according to claims 1 and 3, **characterized in that** two sliders (14a, 14b) are associated at said guides (11a, 11b), have a box-like shape and an approximately L-shaped transverse cross-section, and have a second undercut (15a, 15b), which mates by sliding with said first undercut (12a, 12b).

6. The device according to claims 1 and 5, **characterized in that** the L-shaped configuration of said pair of sliders (14a, 14b) forms, adjacent to said undercut (15a, 15b), an upper lateral surface (16a, 16b) and an underlying lower lateral surface (17a, 17b), which face each other and can slide with respect to the outer surface (18a, 18b) of said guides (11a, 11b) and of said side walls (13a, 13b) of said base (2), said pair of sliders (14a, 14b) having a lower edge (19a, 19b) that lies substantially at said lower edge or surface (3) of said base (2) and an outer upper edge (20a, 20b) which is inclined with an orientation approximately equal to the orientation of said inclined, upper surface (4) of said base (2).

7. The device according to claims 1 and 6, **characterized in that** a lid (22) is associated, by means of adapted screws (21), above said pair of sliders (14a, 14b), the size of said pair of sliders (14a, 14b) and of said lid (22) being such as to surmount completely, in the closed condition, said underlying base (2), said lid (22) being provided at the front with a second bevel (23), which in the closed condition is arranged above said first bevel (7) while said second bevel (23) forms a resting point for the end of said tube (9) of said refueling nozzle (10).

8. The device according to claims 1 and 7, **characterized in that** said lid (22) is provided, in a lower region, with longitudinal perimetric edges (24a, 24b), which are likewise inclined with respect to said outer upper edge (2 0a, 20b) of said pair of sliders (14a, 14b), the shape of said lid (22) being box-like so as to form internally a lower flat surface (25) from which there protrudes, in the direction of said underlying base (2), an annular seat (26) for a sealing means, such as a first gasket (27) which is adapted to interact, hermetically, in the condition in which the lid (22) is closed onto said base (2), with a region adjacent to the perimetric edge of said underlying first hole (8) provided in said surface (4) of said base (2); the inclined arrangement of said surface (4) of said base (2) and of said outer upper edges (20a, 20b) of said pair of sliders (14a, 14b) and the positioning and sizing of said annular seat (26) and of said first gasket (27) are such that, in the condition in which said lid (22) is closed onto said base (2), they entail the hermetic arrangement of said first gasket (27) at said underlying first hole (8) provided in said base (2).

9. The device according to claims 1 and 8, **characterized in that**, in the condition in which said lid (22) is open with respect to said base (2), said first gasket (27) is arranged above and spaced from said upper surface (4) of said base (2).

10. The device according to claims 1 and 9, **characterized in that** the sliding of said pair of sliders (14a, 14b) and of said lid (22) occurs in contrast with at least one elastically deformable element, such as a pair of cylindrical helical extension springs (28a, 28b), said pair of springs (28a, 28b) being arranged at an adapted compartment (29a, 29b) which is provided below said pair of sliders (14a, 14b), said pair of springs (28a, 28b) being interconnected, at their ends, at a first pin (30a, 30b), which protrudes laterally to said side walls (13a, 13b) of said base (2) in a region that preferably lies below said guides (11a, 11b), said first pins being concealed inside said compartment (29a, 29b).

11. The device according to claims 1 and 10, **characterized in that** said first pin (30a, 30b) protrudes in a region which is intermediate between said rear wall (5) and said front wall (6) of said base (2), preferably more adjacent to said rear wall (5), the other end of said pair of springs (28a, 28b) being interconnected to a second pin (3 1 a, 31b), which is jointly connected to said pair of sliders (14a, 14b) and protrudes at said compartment (29a, 29b) in a position that is adjacent to the rear surface (32a, 32b) of each pair of sliders (14a, 14b), the size of said springs (28a, 28b) being such that they tend to keep said lid (22) and said base (2) in the mutually closed condition.

12. The device according to claims 1 and 11, **characterized in that** the sliding of said lid (22) in the direction opposite to said front wall (6) of said base (2) is allowed by such an extent as to make said first hole (8) accessible to said tube (9) of said refueling nozzle (10).

13. The device according to claims 1 and 12, **characterized in that** there are stroke limiting means constituted by a pair of lugs (33a, 33b) which protrude above said guides (11a, 11b) proximate to said rear wall (5) of said base (2), said lugs (33a, 33b) interacting by abutment with adapted means which are provided on said lid (22) and positioned appropriately.

14. The device according to claims 1 and 13, **characterized in that** at said lid (22) there is a recess (34), at which means are provided which are adapted to allow the venting of the tank, said means being constituted preferably by adapted safety valves arranged at a pair of cylindrical seats (35a, 35b) which have adapted second holes (36a, 36b) that pass through said lower surface (25) of said lid (22) in a region which is connected to said underlying first hole (8).

15. The device according to claims 1 and 14, **characterized in that** a second gasket (37) can be positioned perimetrically at the recess (34), said recess (34) being blocked with an adapted removable plug (38), means being provided for temporarily locking the sliding of said slider and of said lid (22) with respect to said base (2), said means being constituted by an adapted lock (39), which can be activated by means of an adapted key (40), said lock (39) being arranged advantageously at a lateral region of said lid (22) while the key activates an adapted and known bolt, which interacts selectively at an adapted receptacle (41) provided at one of said pairs of sliders (14a, 14b).

## Patentansprüche

1. Schutzvorrichtung (1) für den Kraftstofftank von Fahrzeugen, umfassend eine durchbohrte Basis (2), die eine flache untere Oberfläche (3) und eine obere Oberfläche (4) aufweist, **dadurch gekennzeichnet, dass** die obere Oberfläche (4) entlang einer geneigten Ebene angeordnet ist, so dass sie mit der unteren Oberfläche (3) einen spitzen Winkel bildet, wobei die Basis mit dem Tank und zumindest einem Reiter (14a, 14b) verbunden werden kann, so dass dieser gegenüber zumindest einem elastisch verformbaren Element verschoben werden kann, wobei zumindest eine Kappe (22) mit zumindest einem Reiter (14a, 14b) verbunden und entlang einer geneigten Ebene angeordnet ist, die mit Mitteln (27) zum Ausbilden einer Abdichtung mit der Basis (2) versehen ist.

2. Schutzvorrichtung nach Anspruch 1, **dadurch gekennzeichnet, dass** es auf der Kappe Mittel zum temporären Blockieren des Verschiebens des Reiters in Bezug auf die Basis und/oder Mittel, die zum Belüften des Tanks ausgelegt sind, gibt.

3. Schutzvorrichtung nach Anspruch 1 und 2, **dadurch gekennzeichnet, dass** die Basis (2) von einem Körper gebildet wird, der im Wesentlichen wie ein Parallelepiped geformt ist, der eine flache untere Oberfläche (3), die fast auf dem Tank aufliegt und eine obere Oberfläche (4) aufweist, die entlang einer geneigten Ebene angeordnet ist, so dass sie mit der unteren Kante oder Oberfläche (3) in Richtung der Rückwand (5) einen spitzen Winkel bildet, wobei eine Drehung im Uhrzeigersinn als positiv angenommen wird, wobei die Basis (2) eine vordere Wand (6) aufweist, an der etwa mittig eine erste Fase (7) ausgebildet ist, die angepasst ist, um ein Abtropfgefäß auszubilden, wobei an den Seiten der Basis (2) ein paar Führungen (11a, 11b) vorgesehen sind, die ungefähr parallel zueinander und entlang einer gemeinsamen Längsachse, die ungefähr parallel zu der Achse der unteren Kante oder Oberfläche (3) liegt, angeordnet sind, wobei die Führungen (11a, 11b) die Form eines Parallelepipeds sowie einen ersten Hinterschnitt (12a, 12b) der leicht über die Seitenwände (13a, 13b) der Basis (2) hervorsteht, aufweisen.

4. Vorrichtung nach Anspruche 1 und 3, **dadurch gekennzeichnet, dass** ungefähr mittig in der oberen Oberfläche (4) der Basis (2) ein erstes Loch (8) vorhanden ist, das mit einer darunterliegenden in dem Tank vorgesehenen Öffnung verbunden ist, wobei das Rohr (9) einer Zapfanlage (10) in dem ersten Loch angeordnet werden kann.

5. Schutzvorrichtung nach den Ansprüchen 1 und 3, **dadurch gekennzeichnet, dass** zwei Reiter (14a, 14b) mit den Führungen (11a, 11b) verbunden sind, eine kastenförmige Form und einen ungefähr L-förmigen Querschnitt aufweisen und einen zweiten Hinterschnitt (15a, 15b) umfassen, der gleitend in den ersten Hinterschnitt (12a, 12b) eingreift.

6. Schutzvorrichtung nach den Ansprüchen 1 und 5, **dadurch gekennzeichnet, dass** die L-förmige Anordnung der beiden Reiter (14a, 14b) angrenzend an den Hinterschnitt (15a, 15b) eine obere laterale Oberfläche (16a, 16b) und eine darunterliegende untere laterale Oberfläche (17a, 17b) bildet, die einander zugewandt sind und relativ zu der äußeren Oberfläche (18a, 18b) der Führungen (11a, 11 b) und der Seitenwände (13a, 13b) der Basis (2) gleiten können, und wobei die beiden Reiter (14a, 14b) eine untere Kante (1 9a, 19b) aufweisen, die im Wesentlichen an der unteren Kante der Oberfläche (3) der Basis (2) und an einer äußeren oberen Kante (20a, 20b) liegen, die in eine Ausrichtung geneigt ist, die ungefähr gleich zu der Ausrichtung der geneigten oberen Oberfläche (4) der Basis (2) ist.

7. Schutzvorrichtung nach den Ansprüchen 1 und 6, **dadurch gekennzeichnet, dass** eine Kappe (22) mittels angepasster Schrauben (21) über den beiden Reitern (14a, 14b) angebracht ist, wobei die Größe der beiden Reiter (14a, 14b) und der Kappe (22) ausreicht, um im geschlossenen Zustand die darunterliegende Basis (2) vollständig zu überragen, wobei die Kappe (22) an der Vorderseite mit einer zweiten Fase (23) versehen ist, die im geschlossenen Zustand über der ersten Fase (7) angeordnet ist, während die zweite Fase (23) einen Auflagepunkt für das Ende des Rohrs (9) der Zapfanlage (10) bildet.

8. Schutzvorrichtung nach den Ansprüchen 1 und 7, **dadurch gekennzeichnet, dass** die Kappe (22) in einem unteren Abschnitt mit längsumlaufenden Kanten (24a, 24b) versehen ist, die ebenfalls relativ zu der äußeren oberen Kante (20a, 20b) der beiden Reiter (14a, 14b) geneigt sind, wobei die Form der Kappe (22) kastenförmig ist, so dass im Inneren eine untere flache Oberfläche (25) ausgeformt wird, von der aus in Richtung der darunterliegenden Basis (2) ein ringförmiger Vorsprung (26) hervorsteht, der für ein Abdichtungsmittel ist, wie zum Beispiel eine erste Dichtung (27), die ausgelegt ist um, wenn die Kappe (22) die Basis (2) abschließt, hermetisch mit einem Abschnitt abzuschließen, der an die umlaufende Kante des darunterliegenden ersten Lochs (8) angrenzt, das in der Oberfläche (4) der Basis (2) vorgesehen ist, wobei die geneigte Anordnung der Oberfläche (4) der Basis (2) und der äußeren oberen Kanten (20a, 20b) der beiden Reiter (14a, 14b) und die Position und die Größe des ringförmigen Vorsprungs (26) und der ersten Dichtung (27) derart ausgebildet sind, dass in dem Zustand, in dem die Kappe (22) die Basis (2) abschließt eine hermetische Anordnung der ersten Dichtung (27) auf dem darunterliegenden ersten Loch (8) in der Basis (2) bewirkt wird.

9. Schutzvorrichtung nach den Ansprüchen 1 und 8, **dadurch gekennzeichnet, dass** in dem Zustand, in dem die Kappe (22) in einem offenen Zustand bezogen auf die Basis (2) ist, die erste Dichtung (27) überhalb der oberen Oberfläche (4) der Basis (2) angeordnet und von dieser beabstandet ist.

10. Schutzvorrichtung nach Ansprüchen 1 und 9, **dadurch gekennzeichnet, dass** das Verschieben der beiden Reiter (14a, 14b) und der Kappe (22) gegenüber zumindest einem elastisch verformbaren Element wie zum Beispiel einem Paar von zylindrischen spiralförmigen Zugfedern (28a, 28b) geschieht, wobei das Paar von Federn (28a, 28b) in einem angepassten Fach (29a, 29b) angeordnet ist, dass unter den beiden Reitern (14a, 14b) vorgesehen ist, wobei das Paar von Federn (28a, 28b) an ihren Enden mit einem ersten Stift (30a, 30b) verbunden sind, der lateral von den Seitenwänden (13a, 13b) der Basis (2) in einem Bereich, der bevorzugt unterhalb der Führungen (11a, 11 b) liegt, hervorsteht, wobei die ersten Stifte innerhalb des Fachs (29a, 29b) abgedeckt werden.

11. Schutzvorrichtung nach den Ansprüchen 1 und 10, **dadurch gekennzeichnet, dass** der erste Stift (30a, 30b) in einem Abschnitt zwischen der hinteren Wand (5) und der vorderen Wand (6) der Basis (2), bevorzugt näher an der hinteren Wand (5), hervorsteht, wobei das andere Ende des Paars von Federn (28a, 28b) mit einem zweiten Stift (31 a, 31 b) verbunden ist, der zusammenwirkend mit den beiden Reitern (14a, 14b) verbunden ist und bei dem Fach (29a, 29b) in einer Position, die nahe der hinteren Oberfläche (32a, 32b) jedes der beiden Reiter (14a, 14b) hervorsteht, wobei die Größe der Federn (28a, 28b) so ausgelegt ist, dass sie die Kappe (22) und die Basis (2) im geschlossenen Zustand halten.

12. Schutzvorrichtung nach den Ansprüchen 1 und 11, **dadurch gekennzeichnet, dass** das Verschieben der Kappe (22) in der Richtung entgegengesetzt zu der vorderen Wand (6) der Basis (2) soweit möglich ist, dass das erste Loch (8) für das Rohr (9) der Zapfanlage (10) zugänglich wird.

13. Schutzvorrichtung nach den Ansprüchen 1 und 12, **dadurch gekennzeichnet, dass** Anschlagmittel vorgesehen sind, die aus einem Paar Vorsprüngen (33a, 33b) bestehen, die über die Führungen (11a, 11 b) in der Nähe der hinteren Wand (5) der Basis (2) vorstehen, wobei die Vorsprünge (33a, 33b) an daran angepasste Mittel, die an der Kappe (22) vorgesehen und entsprechend positioniert sind, anstoßen.

14. Schutzvorrichtung nach den Ansprüchen 1 und 13, **dadurch gekennzeichnet, dass** in der Kappe (22) eine Ausnehmung (34) ausgebildet ist, an der Mittel vorgesehen sind, die das Belüften des Tanks ermöglichen, wobei die Mittel vorzugsweise aus angepassten Sicherheitsventilen bestehen, die an einem Paar zylindrischer Vorsprünge (35a, 35b) angeordnet sind, die angepasste zweite Löcher (36a, 36b) die sich durch die untere Oberfläche (25) der Kappe (22) in einem Abschnitt, der mit dem darunterliegenden ersten Loch (8) verbunden ist, aufweisen.

15. Sicherheitsvorrichtung nach den Ansprüchen 1 und 14, **dadurch gekennzeichnet, dass** eine zweite Dichtung (37) umlaufend an der Ausnehmung (34) angeordnet werden kann, wobei die Ausnehmung (34) mit einem angepassten abnehmbaren Verschluss (38) verschlossen wird, wobei Mittel zum temporären Blockieren des Verschiebens des Reiters und der Kappe (22) relativ zu der Basis (2) vorgesehen sind, wobei die Mittel aus einem angepassten Schloss (39), das mittels eines angepassten Schlüssels (40) bedient werden kann, wobei das Schloss (39) vorteilhafterweise in einer seitlichen Region der Kappe (22) angeordnet ist, wobei der Schlüssel einen herkömmlichen, angepassten Bolzen aktiviert, der gezielt mit einer angepassten Aufnahme (41), die an einem der beiden Reiter (14a, 14b) vorgesehen ist, zusammenwirkt.

## Revendications

1. Dispositif de protection (1) pour le réservoir de carburant de véhicules, comprenant une base perforée (2) ayant une surface inférieure plate (3) et une surface supérieure (4), **caractérisé en ce que** ladite surface supérieure (4) est agencée le long d'un plan incliné afin de former un angle aigu par rapport à ladite surface inférieure (3), qui peut être associée audit réservoir et avec laquelle au moins une glissière (14a, 14b) est associée de sorte qu'elle peut coulisser en contact avec au moins un élément élastiquement déformable, au moins un couvercle (22) étant associé avec ladite au moins une glissière (14a, 14b) et étant agencé le long d'un plan incliné et doté de moyens (27) pour former un joint d'étanchéité avec ladite base (2).

2. Dispositif selon la revendication 1, **caractérisé en ce que** sur ledit couvercle, il y a des moyens pour empêcher temporairement le glissement de ladite glissière par rapport à ladite base et/ou des moyens adaptés pour permettre la mise à l'air libre dudit réservoir.

3. Dispositif selon les revendications 1 et 2, **caractérisé en ce que** ladite base (2) est constituée par un corps formé essentiellement comme un parallélépipède qui a une surface inférieure plate (3) qui repose presque sur ledit réservoir, et une surface supérieure (4) agencée le long d'un plan incliné afin de former un angle aigu par rapport au bord inférieur ou à la surface inférieure (3) dans la direction de la paroi arrière (5), en supposant une rotation dans le sens des aiguilles d'une montre comme étant positive, ladite base (2) ayant une paroi avant (6) au niveau de laquelle, il y a, de manière approximativement centrale, un premier biseau (7) adapté pour constituer un égouttoir, où au niveau des côtés de ladite base (2), il y a une paire de guides (11a, 11b) qui sont agencés approximativement parallèlement entre eux et le long d'un même axe longitudinal approximativement parallèle à l'axe dudit bord inférieur ou surface inférieure (3), lesdits guides (11a, 11b) ayant une forme parallélépipède et une première gorge (12a, 12b) qui fait légèrement saillie au-delà desdites parois latérales (13a, 13b) de ladite base (2).

4. Dispositif selon les revendications 1 et 3, **caractérisé en ce qu'**approximativement au centre de ladite surface supérieure (4) de ladite base (2), il y a un premier trou (8) qui est raccordé à une ouverture sous-jacente prévue dans ledit réservoir, le tube (9) dans une buse de réapprovisionnement (10), pouvant être agencé au niveau dudit premier trou.

5. Dispositif selon les revendications 1 à 3, **caractérisé en ce que** deux glissières (14a, 14b) sont associées auxdits guides (11a, 11b), ont une forme de boîte et une section transversale approximativement en forme de L, et ont une seconde gorge (15a, 15b) qui se couple en coulissant avec ladite première gorge (12a, 12b).

6. Dispositif selon les revendications 1 et 5, **caractérisé en ce que** la configuration en forme de L de ladite paire de glissières (14a, 14b) forme, de manière adjacente à ladite gorge (15a, 15b), une surface latérale supérieure (16a, 16b) et une surface latérale inférieure sous-jacente (17a, 17b) qui se font face et peuvent coulisser par rapport à la surface externe (18a, 18b) desdits guides (11a, 11b) et desdites parois latérales (13a, 13b) de ladite base (2), ladite paire de glissières (14a, 14b) ayant un bord inférieur (19a, 19b) qui se trouve sensiblement au niveau dudit bord inférieur ou de ladite surface inférieure (3) de ladite base (2) et un bord supérieur externe (20a, 20b) qui est incliné avec une orientation approximativement égale à l'orientation de ladite surface supérieure (4) inclinée de ladite base (2).

7. Dispositif selon les revendications 1 et 6, **caractérisé en ce qu'**un couvercle (22) est associé, au moyen de vis (21) adaptées, au-dessus de ladite paire de glissières (14a, 14b), la taille de ladite paire de glissières (14a, 14b) et dudit couvercle (22) étant telle qu'elle dépasse complètement, dans la condition fermée, ladite base (2) sous-jacente, ledit couvercle (22) étant prévu sur le devant avec un second biseau (23) qui, dans la condition fermée, est agencé au-dessus dudit premier biseau (7) alors que ledit second biseau (23) forme un point d'appui pour l'extrémité dudit tube (9) de ladite buse de réapprovisionnement (10).

8. Dispositif selon les revendications 1 et 7, **caractérisé en ce que** ledit couvercle (22) est prévu, dans une région inférieure, avec des bords périmétraux longitudinaux (24a, 24b) qui sont également inclinés par rapport audit bord supérieur externe (20a, 20b) de ladite paire de glissières (14a, 14b), la forme dudit couvercle (22) étant en forme de boîte afin de former à l'intérieur une surface plate inférieure (25) à partir de laquelle, fait saillie, dans la direction de ladite base (2) sous-jacente, un siège annulaire (26) pour un moyen d'étanchéité, de sorte qu'un premier joint (27) qui est adapté pour interagir hermétiquement, dans la condition dans laquelle le couvercle (22) est fermé sur ladite base (2), avec une région adjacente au bord périmétral dudit premier trou (8) sous-jacent prévu dans ladite surface (4) de ladite base (2); l'agencement incliné de ladite surface (4) de ladite base (2) et desdits bords supérieurs externes (20a, 20b) de ladite paire de glissières (14a, 14b) et le positionnement et le dimensionnement dudit siège annulaire (26) et dudit premier joint (27) sont tels que, dans la condition dans laquelle ledit couvercle (22) est fermé sur ladite base (2), ils entraînent l'agencement hermétique dudit premier joint (27) au niveau dudit premier trou (8) sous-jacent prévu dans ladite base (2).

9. Dispositif selon les revendications 1 et 8, **caractérisé en ce que**, dans la condition dans laquelle ledit couvercle (22) est ouvert par rapport à ladite base (2), ledit premier joint (27) est agencé au-dessus et espacé de ladite surface supérieure (4) de ladite base (2).

10. Dispositif selon les revendications 1 et 9, **caractérisé en ce que** le coulissement de ladite paire de glissières (14a, 14b) et dudit couvercle (22) a lieu en contraste avec au moins un élément élastiquement déformable, comme une paire de ressorts d'extension hélicoïdaux cylindriques (28a, 28b), ladite paire de ressorts (28a, 28b) étant agencée au niveau d'un compartiment (29a, 29b) adapté qui est prévu au-dessous de ladite paire de glissières (14a, 14b), ladite paire de ressorts (28a, 28b) étant interconnectés, au niveau de leurs extrémités, à une première broche (30a, 30b) qui fait saillie latéralement par rapport auxdites parois latérales (13a, 13b) de ladite base (2) dans une région qui se trouve de préférence au-dessous desdits guides (11a, 11b), lesdites premières broches étant dissimulées à l'intérieur dudit compartiment (29a, 29b).

11. Dispositif selon les revendications 1 et 10, **caractérisé en ce que** ladite première broche (30a, 30b) fait saillie dans une région qui est entre ladite paroi arrière (5) et ladite paroi avant (6) de ladite base (2), de préférence plus adjacente à ladite paroi arrière (5), l'autre extrémité de ladite paire de ressorts (28a, 28b) étant interconnectée à une seconde broche (31a, 31b) qui est conjointement raccordée à ladite paire de glissières (14a, 14b) et fait saillie au niveau dudit compartiment (29a, 29b) dans une position qui est adjacente à la surface arrière (32a, 32b) de chaque paire de glissières (14a, 14b), la taille desdits ressorts (28a, 28b) étant telle qu'ils ont tendance à maintenir ledit couvercle (22) et ladite base (2) dans la condition mutuellement fermée.

12. Dispositif selon les revendications 1 et 11, **caractérisé en ce que** le coulissement dudit couvercle (22) dans la direction opposée à ladite paroi avant (6) de ladite base (2) est autorisé dans la mesure où il rend accessible ledit premier trou (8) par rapport audit tube (9) de ladite buse de réapprovisionnement (10).

13. Dispositif selon les revendications 1 et 12, **caractérisé en ce qu'**il y a des moyens de limite de course constitués par une paire de pattes (33a, 33b) qui font saillie au-dessus desdits guides (11a, 11b) à proximité de ladite paroi arrière (5) de ladite base (2), lesdites pattes (33a, 33b) interagissant par butée avec des moyens adaptés qui sont prévus sur ledit couvercle (22) et positionnés de manière appropriée.

14. Dispositif selon les revendications 1 et 13, **caractérisé en ce qu'**au niveau dudit couvercle (22), il y a un évidement (34) au niveau duquel on prévoit des moyens qui sont adaptés pour permettre la mise à l'air libre du réservoir, lesdits moyens étant constitués de préférence par des valves de sécurité adaptées, agencées au niveau d'une paire de sièges cylindriques (35a, 35b) qui ont des seconds trous (36a, 36b) adaptés qui traversent ladite surface inférieure (25) dudit couvercle (22) dans une région qui est raccordée audit premier trou (8) sous-jacent.

15. Dispositif selon les revendications 1 et 14, **caractérisé en ce qu'**un second joint (37) peut être positionné de manière périmétrale au niveau de l'évidement (34), ledit évidement (34) étant bouché avec un bouchon (38) amovible adapté, des moyens étant prévus pour empêcher temporairement le coulissement de ladite glissière et dudit couvercle (22) par rapport à ladite base (2), lesdits moyens étant constitués par un verrou (39) adapté qui peut être activé au moyen d'une clé (40) adaptée, ledit verrou (39) étant agencé de manière avantageuse au niveau d'une région latérale dudit couvercle (22) alors que la clé active un boulon adapté et connu qui interagit sélectivement au niveau d'un réceptacle (41) adapté, prévu au niveau de l'une desdites paires de glissières (14a, 14b).
